# DEMANDE DE BREVET EUROPEEN

(11) **EP 1 605 411 A1**
(43) Date de publication de la demande: **14.12.2005**
(21) Numéro de dépôt: 03772364.0
(22) Date de dépôt: 19.11.2003
(51) Int. Cl.: G07C 9/00, G07F 7/00, G06K 9/62

(54) **SYSTEME DE RECONNAISSANCE COMPARATIF DE CARACTERES IMPRIMES SUR DES SUPPORTS PHYSIQUES**

(30) Priorité: 19.11.2002 ES 200202791
(71) Demandeur: Rivera Len, José, 08211 Castellar del Valles (ES); Granados Sanchez, Maria Dolores, 08211 Castellar del Valles (ES)
(72) Inventeur: Rivera Len, José, 08211 Castellar del Valles (ES); Granados Sanchez, Maria Dolores, 08211 Castellar del Valles (ES)
(86) Numéro de dépôt international: PCT/ES2003/000588
(87) Numéro de publication internationale: WO 2004/047031

(57) **Abrégé**

L'invention concerne un système de reconnaissance comparatif de caractères imprimés sur des supports physiques à partir d'une analyse effectuée à l'aide d'un logiciel comprenant des paramètres prédéterminés, lequel est utilisé pour effectuer des contrôles d'accès et de reconnaissance d'identités. Ledit système est formé de deux éléments de base: un support physique, dans lequel sont inscrits des caractères imprimés prédéterminés aux caractéristiques physiques déterminées définissant leurs valeurs d'identification, et une carcasse (1) à l'intérieur de laquelle se situe le matériel ou plaque de circuits électroniques (2) activant le logiciel informatique prédéfini, ladite carcasse (1) ne comprenant pas d'ouverture, excepté une rainure (4) par laquelle est introduit le support physique (5) comprenant des chiffres et des signes imprimés afin que le lecteur optique (3) agisse sur ceux-ci conformément au logiciel informatique intégré dans le système, lequel ne comprend pas de mémoire de stockage de données.

## Description

L'objet de cette brevet d'investion il est un SYSTÈME DE RECONNAISSANCE COMPARATIF DES CARACTÈRS IMPRIMÉS SUR LES SUPPORTS PHYSIQUES que, pour leurs caractéristiques techniques et son spécial configuration, surpass largement la technique de tout qui ça existe jusqu'a le moment actuel, tan a niveau legal comme au marché.

L'implantation des nauvelles technologies de l'information additionnées a l'apoqée de l'investigation et développement scientifique a derivé dans un change substantiel dans les moeurs de la société actuelle. Sirtout l'activité qu'on devéloppe est la méme, mais les moyens a travers lesquels els ont été exécutes son completment différents. Ainsi, par exemple, le marché est virtuel, on acquiert toute sort de produits au moyen des reseaux informatiquées repandu sur tout le planète; on exécute tout sort d'opérations bancaires pour Internet, achat et vente d'actions, transfer d'argent d'une compte a une outre, on peut effectuer toute sort d'affaires administratifs depuis un terminal informatique, etc.... Malgré tout, ces operations elles vont tou jours etroitements unies et elles dépendent directement de conaitre, contrôler et interpréter un grand numéro de renseignements de caractère personnel: DNI, passeports, numéros de compte, mots d'accés.... Le résultat ce que dans l'actualité le volume d'information personnele qu'on trouve archivés dans les reseaux informatiquées il est immense et incôntrolable. Et cela comporte le risque indubitable du mauvais usage et de la violation de ces renseignements privés.

Il n'existe pas dans l'actualité aucun moven alternatif qui nous permettrions d'exécuter toutes ces actions et beaucoup d'autres sans l'intervention d'un système basée dans la constatation comparatif des données, c'est a dire, il faut qu'existe Une base préalable d'information que nous permettrons constater la veracité des données qu'on facilite pour effectuer n'inporte quelle opération. Et cette prémisse est applicable pas seulement dans les cas qu'on a décrit auparavant déjà abondantement connu pour ça cotidianitée, mais dans beaucoup d'autres qu'on ce déroule au plus grand niveaux privé, comme ce le cas du contróle d'accès dans les zones restrictifs de caractére scientifique ou militaire où le mecanisme d'accès on ce rapporte pas uniquement a l'information qu'on puisse qualifier d'externe, mais qu'intervient a travers d'une information physique d'usagere: l'identification personnelle a travers des empreintes dactyléers, du timbre du voix et des rétinés oculaires sont un claire exemple. Et quelque soit le cas, toujours on etablirá une base informatique que contient préalablement ces données de façon qu'en comparaison avec celles d'usagere, il avert une série de coincidences qui doit décider l'accés au bien la dénégation a la sollicitude du méme. Par example, la porte s'oubre si l'image de la rétiné de l'usagere coincide avec l'image de la rétiné préalablement enregistrés.

Sur ce point ont a besoin d'atablir un sisteme qui nous permet d'indentifièr a une personne pour lui permettre ou bien dénier son accés a une question déterminé sans avoir besoin de consulter aucun base de données préalablement enregistrée c'est a dire, en garantisent au maximun la privacitée personnel de l'usagere et au méme temps, garantir qu'il a des conditions nécessaires pour exécuter l'ordre qu'on lui a été demandée. De cette façon il est necessaire chercher un système pour ètablir un mécanisme de contrôle spécifique a partir des paramètres minimes predéterminées au marge de n'amporte quelle base de données.

La proposition qu'on present dans cette mémoire descriptif, suppose un important avancement sur ce champ puisqu'elle conforme un système global a partir d'un analyse comparatif efectué moyenant un software avec des paramètres préalablement déterminés.

Une des aplications fondamentals et specifiques de ce système est de contrôler les mécanismes d'ouverture de machines a dépenser des articles dont leur consommation est limité, ou on previent limiter, pour la Loi en fonction de l'age de l'usagere. Il ságit par exemple, des machines a dépenser de tabac et de boissons alcooliques et aussi des machines récréatifs, espécialement les machines distributeurs automatiques des monnais, qui enclin a la addition et qu'implique une dépens d'argent considérable pour le joueur, debouchent en maladies chroniques tel qu'elle la ludopatie. Dans tous ces cas, le droit au libre consommation est limité a cause de l'age de l'usagere, mais il n'y a pas de mecanisme de contrôle de garantie pour le renommé contrôle au même temps que la privacitée des données personêlles d'usagere.

Cette innovation établi un système d'identification a partir de deux éléments basiques. En premier lieu, un support physique qu'il peut adopter n'importe quelle forme, depuis un carnet et jusqu'a une feuille du papier sur lequel on inscrivent des caractèrs imprimés predéterminement qu'ils peuvent faire référence a nímporte quel donnée qu'on désire, depuis une date de naissance jusqu'a une clef déterminé. Ces caractèrs ou chiffres imprimés ils adoptent unes cractéristiques physiques déterminés qu'ils definissent et marquent les valeurs d'identification du même: le type du lettre - Times, Tahoma... - le corps ou taille, son volume, epaisseur, l'espace entre chaque lettre ou symbole, le type d'encre employé etc... et n'importe quelle autre caracteristique qu'on considére significatif.

Le deuxième élément qu'intervient dans ce système et du type technique et on le précise dans le lecteur du support phisyque decrit auparavant. Ce lecteur il est configuré pour un cercle electronique intégré dans une boîte ou carcase qu'actif le software informatique programée avec les parametres qu'ils permettrent reconnaître les caractéristiques physiques du chiffres imprimés dans le support physique de l'information, et en fonction de la conscience d'unes et d'autres, il admettra ou bien annulera la demande de l'usagere. Dans outres mots, quand un usagere il desire acquérir une boisson alcoolique d'une machine Débitant, elle introduit ce support physique, qu'il peut être un carnet, dans la rainure prévu sur la boît ou carcase, de façon que le lecteur, sans aucun contac avec ce support physique, qu'il lise les graphismes imprimés. Le software informatique réalise un analyse comparatif d'accord avec les parametres qu'il a prédéterminés mais dans aucun cas il garde ou classe dans sa mémoire d'autres données qu'ils peuvent exister dans le support physique. S'il s'agit des coïncidennces, le système permettrent que l"usagere achete la boisson. S'il ne s'agit pas des coïncidennces lui déniera l'accés. Cette acceptation ou dénégation qu'on peut traduire directement dans le contrôle d'ouverture de la porte ou dans quel que soit le moyen qu'il permet ou non l'adquisition du product.

Le système qu'on revendique peut agir a partir des caractéristiques physiques du graphismes imprimés dans le support physique identificatif de l'usagere ou aussi a partir du signification concret du même, par exemple une date de naissance, une ville ou quel que d'autre.

Un exemple de fonctionnement de ce système peut être basé dans l'age de l'usagere. Dans ce cas, par exemple, si le support physique il porte imprimé la date de naissance le software informatif il réalise l'analyse comparatif a travers d'un calendrier predéterminé d'accord avec la date actuelle. De cette façon on contrôle l'age de l'usagere et on agi en conséquence.

Dans quel que cas, le software informatique il n'agi pas seulement sur les chiffres imprimées mais aussi sur le support physique que déjà analyse les caractéristiques physiques du même: taille, epaisseur, grammage, texture... ou quel que d'autre réferencé ou parametres qu'il ait été predéterminé.

La carcase ou boîte de ce mécanisme electronique il ne présente pas sur son corps aucene ouverture ni élément qu'il puisse permettre une possible manipulation du mécanisme electronique qu'elle contient. L'unique ouverture existant ce la qu'elle permet l'introduction du support physique d'identification, mais cette ouverture elle est adécuat de forme exprés au talle de ce support.

Le lecteur optique il peut fonctionner moyennant des rayons infrarouges, rayon laser ou quel que d'outre système de similaires caractéristiques et fonctionnalites.

Le software informatique il na pas dans aucun cas capacité pour emmagasiner aucune donnés mais simplement pour réalicer l'analyse comparatif entre le support physique et les chiffres ou caractèrs imprimés dans le même et les parametres avec les qu'il a été predéterminé.

De cette façon le système qu'il revindique valide physicament l'authenticité du carnet, document ou support introduit (5) il est egalement capable de reconnaitre les copies fausses du renommé carnet, document ou support introduit (5).

Egalement ce système qu'il préconise et garanti la privacité du données du carnet, document ou support introduit (5) en accord avec la législation de protection de données puisse qu'aucune de ces données reste emmagasiné dans la memoire du système.

Le mecanisme contenu dans la carcase ou boîte incorpore les moyens d'alimentation adéquats.

L'usage et les applications de ce système a eté decrit dans cette memoire descriptif et il part du supposé que le support physique qu'intervient dans le même est un document officiel, cest a dire, amis pour une entité compétent qu'on etabli la validité du parametres comparatifs. Pour tant l'usage frauduleux de ce supporte de caractèr personnel et inaccesible, comme ça sa falsification, serait un acte illégal comme puis être dans le cas d'autres documents comme cartes de crédit ou documents d'identite.

Dans le cas d'action comme mécanisme de control d'une machine a depénser de tabac, alcool ou bien quel que d'outre produit, de système décrit incorpore les moyens adéquats pour interagir avec la renommé machine, C'est a dire, la carcase ou boîte elle peut incorporer une rainure pour l'admission des monnaies ou une ouverture pour la sortie du produit.

Pou compléter la description qu'on réalise et avec l'objet de aider a une meilleur compréhension du caractéristiques de l'invention, on adjoint a la présent memoire descriptif, comme pártie intégrant du même, quelques lames avec d'images et dessins où avec carácter ilustratif et pas limité, on les représent como il suit:

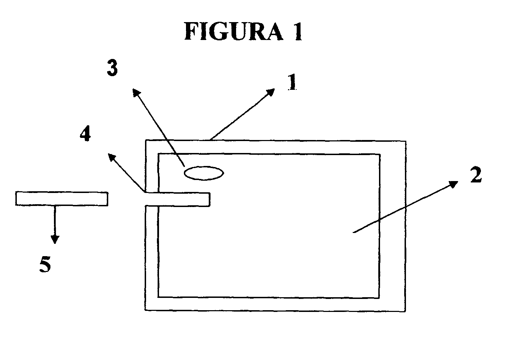

### Figure 1:. Plan de l'innovation réferenciés.

D'acord avec le dessin dans la Figure 1 on peut advertir la configuration de l'innovation qu'on propose, sur la quelle on doit referencier son structure basique conformé pour un corps en forme de carcase ou contenaire (1) dont son interieur il est practiquement occupé pour le hardware o plaque de circuit électronique (2) qu'agit le système. Dit carcase (1) elle na pas aucune ouverture excepté une rainure ou similaire (4) au travers de la quelle le support physique (5) avec les chiffres et signes imprimés on introduit dans l'interieur de la carcase (1) de façon que le lecteur optique (3) puisse lere ces grafhismes d'acord avec la software informatique intégré dans le système.

Quand le lecteur optique (3) agit sur le support physique (5) et sur les chiffres imprimés sur le même, le software informatique réalise un analyse comparatif d'accord avec les parametres predéfini, après d'affronter l'information qu'on obtient du support physique (5) et ses chiffres avec l'information qu'il a defini. S'il y a de coïncidence, le système autorise la petition de l'usagere. S'il y a pas de coïncidence, elle est denié.

Le présent brevet d'investion prevoit que ce mécanisme qu'on décrit soit intégré dans déterminés machines a depénser o dans quel que d'autres engrenage qu'interviens dans un control d'accès. Par exemple, si on forme partie d'une machine a depénser, le software informatique autoriserai o non la Sortie du produit en question, soit moyennan le control de l'ouverture d'une brèche o similaire simplement retenant le produit dans l'interieur de la machine o bien d'autre moyen que permet un control similaire. Si le système de control qu'on revindique est intégré dans un mecanisme de control d'accès a une zone restreindret, le software, agira sur la porte d'accès au enceinte.

Il nést pas nécessaire de faire plus vaste cette description pour qu'un expert dans la matière comprend le but de l'invention et les avantages qu'on dérive du même. Les matériels, forme, taille, et disposition des éléments seront susceptibles de variation tou jours et quand cela ne suppose pas une alteration dans l'essentialite de l'invention. Les termes du redaction de cette memoire debron être prises tau jours dans un sans large et pas limitatif.

## Revendications

1. SYSTÈME DE RECONNAISSANCE COMPARATIF DES CARACTÈRS IMPRIMÉS SUR LES SUPPORTS SHYSIQUES, **caractérisé** speciálment parce qu'on etablit a partir de deux éléments basiques, ayant été le premier du quel un support physique qu'il puisse adopter quel que forme et dans le quel on puisse inscrire des caractèrs imprimés predéterminémentqu'adopte unes caractéristiques physiques déterminés qu'on définissent et marquent les valeurs d'identification du même, c'est a dire, type de lettre o symbole, taille, volumé, epaisseur du chiffre o lettre, l'espace entre chaque lettre o symbole le type d'encre employé... etc et quel que d'autre caractéristique qu'on considere sgnificatif.

2. SYSTÈME DE RECONNAISSANCE COMPARATIF DES CARACTÈRS IMPRIMÉS SUR LES SUPPORTS PHYSIQUES, d'après la 1° revendication, **caractérisé** essentielement parce que le deuxième élément qu'intervient dans cette système il est du type technique et se concret dans un corps a mode de carcase o contenaire (1) dont l'interieur il est practiquement occupé pour le hardware o plaque de circuits electroniques (2) qu'actif le software informatique predèfinie, manquant la dite carcase (1) d'aucune ouverture excepté une rainure o similaire (4) a travers du quel le support physique (5) avec les chiffres imprimées qu'on introduit dans l'interieur de la renommé carcase (1) de façon que le lecteur optique (3) actue sur ces graphismes d'accord avec le software informatique intégré dans le système.

3. SYSTÈME DE RECONNAISSANCE COMPARATIF DES CARACTÈRS IMPRIMÉS SUR LES SUPPORTS PHYSIQUES, d'après les revendications antérieurs, **caractérisé** essentielment pour quand le lecteur optique (3) actue sur le support physique (5) et sur les chiffres imprimées sur le même, le software informatique réalise un analyse comparatif d'accord avec les parametres predefinis, contraste l'information qu'obtient du support physique (5) et ses chiffres avec l'information qu'il a predèfinie.

4. SYSTÈME DE RECONNAISSANCE COMPARATIF DES CARACTERS IMPRIMÉS SUR LES SUPPORTS PHYSIQUES, d'après les revendications antérieurs, **caractérisé** essentielment pour quand le lecteur optique (3) actue moyennant rayons infrarouges, rayon laser et d'autres systèmes de similaires caractéristiques et fonctionnalité.

5. SYSTÈME DE RECONNAISSANCE COMPARATIF DES CARACTÈRS IMPRIMÉS SUS LES SUPPORTS PHYSIQUES, d'après les revendications antérieurs caracterisé essentielment pour quand le système qu'on revindique est intégré dans n'importe quel mécanisme de control qu'actue sur de machines a depénser et distributeur automatique des monnais et sur l'ouverture des portes d'accés a zones o lieux concrets.

6. SYSTÈME DE RECONNAISSANCE COMPARATIF DES CARACTÈRS IMPRIMÉS SUR LES SUPPORTS PHYSIQUES, d'après les revendications antérieurs caracterisé essentielment pour quand le mecanisme contenue dans la carcas incorpore moyens d'alimentation.
